# EUROPEAN PATENT SPECIFICATION

(11) **EP 0 819 732 B1**
(45) Date of publication and mention of the grant of the patent: **15.06.2005**
(21) Application number: 97305091.7
(22) Date of filing: 10.07.1997
(51) Int. Cl.: C08L 15/00, C08L 19/00, C08L 23/28, B60C 1/00, C08J 3/24

(54) **Rubber composition**
Kautschukmischung
Composition de caoutchouc

(30) Priority: 15.07.1996 JP 18478996
(43) Date of publication of application: 21.01.1998
(73) Proprietor: Sumitomo Rubber Industries Ltd., Kobe-shi, Hyogo-ken (JP)
(72) Inventor: Minagawa, Yasuhisa, Akashi-shi, Huyogo-ken (JP); Sarashi, Hiroki, Wakayama-ken (JP); Ueda, Minoru, Izumi-shi Osaka-fu (JP)
(74) Representative: Manitz, Finsterwald & Partner

(56) References cited:
- EP-A- 0 171 926
- US-A- 5 491 196
- PATENT ABSTRACTS OF JAPAN vol. 007, no. 014 (C-146), 20 January 1983 (1983-01-20) & JP 57 172945 A (TOYO GOMU KOGYO KK), 25 October 1982 (1982-10-25)

## Description

The present invention relates to a process for producing a rubber composition of low air permeability.

Hitherto, in order to gain air permeability performance which cannot be obtained by a rubber composition using one rubber as a rubber components and also to achieve improvement in processability of the resulting rubber composition and low cost raw materials, a blend of two or more rubbers has been used.

Also, in the field of tyres, particularly for an innerliner, a case or the like, since low air permeability and the adhesion to other diene rubber compositions on vulcanisation are necessary and it is known to employ a rubber composition of two or more rubbers, one of which is a rubber of low air permeability.

For improving the low air permeability, if the proportion of low air permeable rubber in the rubber composition is increased, for example, to not less than 50% by weight of the rubber component, however, there is a problem that the adhesion property on vulcanisation between the rubber composition and other diene rubber compositions in the tyre becomes considerably lowered.

On the other hand, with respect to a rubber composition comprising two or more rubbens, i.e. a functional group-vulcanisable rubber and a double bond-vulcanisable rubber, JP-A-121766/1996 proposes a rubber composition containing a selectively vulcanised functional group-vulcanisable rubber by carrying out two-step kneading or mixing. By vulcanising the obtained rubber composition after moulding, the double bond-vulcanisable rubber is also vulcanised and a rubber moulded article which does not contain any rubber in the non-vulcanised state can be obtained.

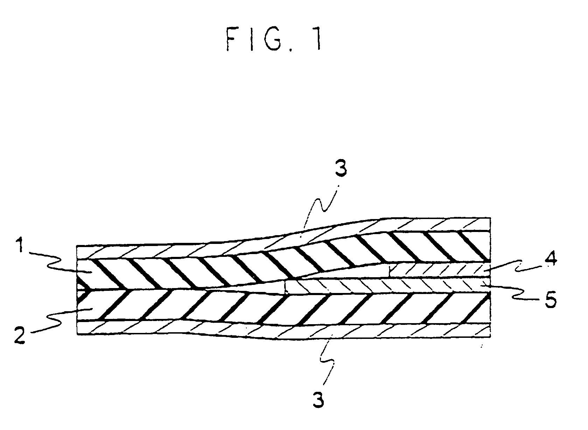

An object of the present invention is to provide a process for producing a rubber composition which can provide a rubber moulded article superior in adhesion property to other diene rubber compositions by vulcanisation and is not inferior in low air permeability. For the measurement of peel strength a sample as shown in Figure 1 is conveniently used.

Accordingly the present invention comprises a process for producing a rubber composition as set out in claim 1.

For the functional group of the functional group-vulcanisable rubber, there can be preferably employed hydroxyl group, carboxyl group, amino group, isocyanate group, epoxy group, acid anhydride group, halogen atom (including fluorine atom in fluorine-containing polymer), ester group, chlorosulfonic group, methylol group, sulfonic acid salt group and/or nitrile group. As the curing agent, there can be employed an organic curing agent and/or an inorganic curing agent.

For the low air permeable functional group-vulcanisable rubber, there are preferably employed a brominated isobutylene/p-methylstyrene copolymer rubber, a chlorobutyl rubber and/or bromobutyl rubber.

Among the curing agents, as the organic curing agent, there is employed polyamine, polycarboxylic acid or polyol and as the inorganic curing agent, there is employed an oxide, carbonate or hydroxide of a bivalent metal such as Mg, Zn, Ca or Ba. The organic curing agent is preferably N,N'-diethylthiourea.

It is preferable that the temperature range for the mixing the step (a) is from 40°C to 100°C and the temperature range of the mixing in step (b) is from 90° to 140°C, provided that the kneading temperature in step (a) must be lower than that in step (b). It is further preferable that the temperature range for the mixing in step (a) is from 60° to 90°C and the temperature range for the mixing in step (b) is from 100° to 120°C.

In the present invention, the functional group-vulcanisable rubber and the double bond vulcanisable rubber are different from each other in the following points. Namely, the former can provide a rubber moulded article obtained from the rubber composition of the present invention with superior low air permeability and the crosslinking point is the functional group. On the other hand, the latter has affinity to other diene rubber compositions and can endow the rubber composition of the present invention with superior adhesion properties to other diene rubbers by vulcanisation, and the crosslinking point is carbon-carbon double bond.

The functional group-vulcanisable rubber is a rubber having a functional group which can give the crosslinking point. Though the functional group-vulcanisable rubber may contain a carbon-carbon double bond, in such a case, the degree of unsaturation is not higher then 50, preferably not higher than 30. It is further preferably lower unsaturation (higher saturation) of not higher than 25 in order that the functional group can selectively give a crosslinking point. In other words, the functional group vulcanisable rubber cannot be vulcanised with sulfur or is difficult to be vulcanised with sulfur.

In the low air permeable rubber having vulcanisable functional group, as a rubber into which the functional group is introduced (hereinafter referred to as "saturated rubber), there are employed acrylonitrile-butadiene rubber (NBR), fluorine-containing rubber, epychlorohydrin rubber, butyl rubber, halogenated butyl rubber, brominated isobutylene/p-methylstyrene copolymer rubber, chloroprene rubber, ethylene/acrylate copolymer rubber, epoxidised natural rubber, and ethylene/propylene/diene rubber (EPDM). Among them, NBR, halogenated butyl rubber, brominated isobutylene/p-methylstyrene copolymer rubber, chloroprene rubber, epoxidised natural rubber, EPDM are preferable from the viewpoint that the air permeability thereof is lower than that of the diene rubber such as natural rubber (NR). These rubbers are blended with the double bond-vulcanisable rubber after the necessary functional group is introduced.

The functional group is introduced into the saturated rubber to make vulcanisation (crosslinking) possible by a curing agent except for sulfur. In the case of fluorine-containing rubber, epichlorohydrin rubber, halogenated butyl rubber, chloroprene rubber, brominated isobutylene/p-methylstyrene oopolymer rubber, epoxidised natural rubber and NBR, the functional group is not necessarily introduced newly.

The functional group of the functional group-vulcanisable rubber is a functional group which make vulcanisation (crosslinking) of the functional , group-vulcanisable rubber possible by using a curing agent except for sulfur. As the functional group, there are, for example, hydroxyl group, carboxyl group, amino group, isocyanate group, acid anhydride group, halogen atom (including fluorine atom in fluorine-containing polymer), ester group, chlorosulfonic group, methylol group, sulfonic acid salt group and/or nitrile group. Further to be specific, there are -OH, -COOH, -NH₂, -NCO, 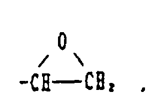 -F, -Cl, -Br, -I, -SO₂Cl, -CH₂OH, -CH₂Cl, 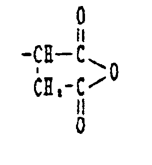 and -C≡ N.

Among them, preferable are halogen atom, acid anhydride group, carboxylic group and epoxy group from the viewpoint that these functional groups can react rapidly.

To introduce the functional group into the saturated rubber, the usual methods can be employed. When introducing a hydroxyl group, for example, there is employed a hydrocarbon method or so-called oxymercuration-demercuration method which utilises a slight amount of double bond in the saturated rubber. In the case where the saturated rubber contains halogen atoms, the hydrolysis method is usable. When introducing carboxyl group, there is employed a method in which primary alcohol is oxidised with potassium permanganate or the like, or a carbonatation method using Grignard reagent. When introducing an amino group, there is employed, for example, a method in which an alcoholic hydroxyl group is halogenated and then converted to an amino group or a method in which a brominated p-methylstyrene is nitrilated and then reduced. When introducing an epoxy group, there is employed a method using formic acid and hydrogen peroxide.

The functional group has a role to endow the saturated rubber with a crosslinking point to give a functional group-vulcanisable rubber. The amount of the functional group can be determined optionally according to use and may be usually 0.5 to 50 of functional groups per 100 units of recurring units, preferably 1 to 10. Even if the amount of the functional group is large, crosslinking density can be controlled by the amount of curing agent.

Examples of the commercially available low air permeable rubber with a vulcanisable functional group are, for instance, EXXPRO 90-10 (brominate isobutylene/p-methylstyrene copolymer rubber) available from EXXON Corporation, Bromobutyl 2222 (bromobutyl rubber) by EXXON Corporation, Chlorobutyl 1066 (chlorobutyl rubber) available from EXXON Corporation, Neoprene WRT (chloroprene rubber) available from Showa Denko K.K. or E.I. du pont de Nemours & Co, expoxidised natural rubber available from Guthrie Co Ltd, Esprene EMA2752 (ethylene/acrylate copolymer rubber) available from Sumitomo Chemical Co Ltd, ROYALTUF® 465 (maleic acid-modified EPDM) available from Uniroyal Chemical Company Inc. These low air permeable rubbers having vulcanisable functional group can be used in the present invention.

The curing agent in the present invention intermolecularly crosslinks the functional groups of the functional group-vulcanisable rubber and vulcanises the functional group-vulcanisable rubber. A compound which can selectively react with the functional group is used as the curing agent. In the present invention the amount of the curing agent is 0.1 to 30 parts by weight of 100 parts by weight of the functional group-vulcanisable rubber, preferably 0.1 to 11 parts by weight, and, as the curing agent, each of the organic curing agent and the inorganic curing agent (except for sulfur) can be used alone, or can be used together.

Examples of the organic curing agent are, for instance, polyamines such as N,N'-diethylthiourea (EUR), N-phenyl-N'-(1,2-dimethylbutyl)-p-phenylenediamine and 4,4'-diamino-diphenyl ether; polycarboxylic acids such as suberic acid, oxalic acid, succinic acid, adipic acid and maleic acid; polyols such as ethylene glycol and propylene glycol; polyisocyanates such as 2,4-tolylenediisocyanate and diphenylmethane-4,4'-diisocyanate; zinc diethyldithiocarbamate and dipentamethylene thiuram tetrasulfide. In the case that the functional group of the functional group-vulcanisable rubber is carboxylic group, halogen atom, acid anhydride group or hydroxyl group, it is preferable to use a polyamine as the curing agent. In the case of an amino group, it is preferable to use a polyol or a polyisocyanate as the curing agent.

Examples of the inorganic curing agent are, for instance, an oxide, carbonate or hydroxide of a divalent metal such as Mg, Zn, Ca or Ba. In the case where the functional group of the functional group-vulcanisable rubber is a halogen atom it is preferable to use the inorganic curing agent. Among them zinc oxide is further preferable from the viewpoint of high reactivity.

The amount of the organic curing agent to be mixed with the low air permeable function group-vulcanisable rubber is 0.1 to 10 parts by weight per 100 parts by weight of the functional group-vulcanisable rubber, preferably 0.1 to 3 parts by weight from the viewpoint of decrease in mixing time and improvements in physical properties of the rubber. Also, the amount of the inorganic curing agent is 1 to 20 parts by weight per 100 parts by weight of the functional group-vulcanisable rubber, preferably 1 to 8 parts by weight from the viewpoint of decrease in mixing time and improvements in physical properties of the rubber. The organic curing agent and the inorganic agent can be used alone or can be used together. When the organic curing agent and the inorganic agent are used together, each can be used in an amount within the range where each curing agent is used alone.

At this step, other additives may be admixed in an amount within a range where the adhesion property on vulcanisation of the rubber composition of the present invention and the low air permeability of the rubber moulded article obtained from the rubber composition are not lowered. Examples of the other ingredients are, for instance, accelerators such as stearic acid, process oil, fillers such as carbon black, anitoxidants, and the like.

The mixing step (a) is carried out at a temperature within a range where the functional group-vulcanisable rubber is not vulcanised and processability of the rubber composition is not decreased. Preferably the mixing step (a) is carried out at a temperature within a range from 60° to 100°C from the viewpoint of improvement of processability, further preferably within a range from 40°C to 90°C from the viewpoint of improvement of physical properties. Also, it is preferably to carry out mixing step (a) by means of open rolls from the viewpoint that physical properties are made stable, or by means of a Banbury mixer from the viewpoint that processability and workability are increased.

Then, in step (b), the mixed product obtained in step (a) is mixed with the double bond-vulcanisable rubber at a temperature within a range where the functional group-vulcanisable rubber can be vulcanised to selectively vulcanise the functional group vulcanisable rubber.

The double bond-vulcanisable rubber is a rubber having a carbon-carbon double bond which gives the crosslinking point. Though any functional group may be contained, it is preferable that the content of the functional group is lower, preferably 0.1 to 5 of the functional groups per 100 units of recurring units. On the other hand, it is preferable that the content of carbon-carbon double bonds is higher. The degree of unsaturation of the double bond-vulcanisable rubber is not lower than 50, preferably not lower than 70, and not lower than 90 in the case where the functional group is contained.

The double bond-vulcanisable rubber may be a rubber which has affinity to diene rubber compositions and endows the rubber composition to be obtained with a superior adhesion property to other diene rubber compositions by vulcanisation. Examples of the double bond-vulcanisable rubber are, for instance, diene rubbers such as NR, isoprene rubber, butadiene rubber, styrene-butadiene rubber (SBR) and NBR. The rubber can be used along, or in optional admixture of two or more. It is preferable to use NR, SBR, NBR from the viewpoint that mechanical strength is improved and it is further preferably to use NR from the viewpoint that tackiness is given.

With respect to the amount of the double bond-vulcanisable rubber to be mixed with the mixed product obtained in step (a), the amount of the double bond vulcanisable rubber is 25 to 100 parts by weight per 100 parts by weight of the functional group-vulcanisable rubber, from the viewpoint that air permeability is lowered more preferably 25 to 50 parts by weight, and from the viewpoint that adhesive strength is increased, preferably 50 to 100 parts by weight. A rubber composition obtained by mixing and selectively vulcanising the functional group-vulcanisable rubber is the rubber composition of the present invention. At mixing step (b) for the selective vulcanisation, other additives may be admixed in an amount within a range where the adhesion property vulcanisation of the rubber composition of the present invention and the low air permeability of the rubber moulded article obtained from the rubber composition is not lowered. Examples of the other additives are, for instance, accelerators such as stearic acid, process oils, fillers, antioxidants and the like.

In mixing step (b) , only the functional group-vulcanisable rubber is vulcanised selectively in the blended rubber comprising the functional group-vulcanisable rubber and the double bond-vulcanisable rubber.

The selective vulcanisation is achieved by mixing at a temperature within a range where the functional group-vulcanisable rubber begins to be vulcanised and deterioration of the resulting rubber composition is not caused. When using natural rubber the mixing temperature in step (b) is preferably from 90°C to 140°C, more preferably from 100°C to 120°C from the viewpoint that mixing time can be shortened. Mixing can be carried out in the same way and by the same procedures as in the mixing of step (a). The temperature at the time of the selective vulcanisation in step (b) must be higher than the mixing temperature in step (a). Also, it is preferable to carry out the mixing in a Banbury mixer from the viewpoint of improvements of processability and workability.

The resultant rubber composition comprises the non-vulcanised double bond-vulcanisable rubber as the matrix in which the vulcanised functional group-vulcanisable rubber exists uniformly.

The rubber composition of the present invention is superior in adhesion property to other diene rubber compositions on vulcanisation. After the rubber composition of the present invention is moulded according to a usual mould method such as moulding with rolls or extrusion moulding, the double bond-vulcanising rubber is finally vulcanised to give a rubber moulded article superior in low air permeability.

The vulcanisation of the double bond-vulcanisable rubber can be carried out by adding a given amount (for example, 0.5 to 2 PHR) of sulfur which is a vulcanising agent for the double bond-vulcanisable rubber into the rubber composition and, if necessary, adding an accelerator such as stearic acid, N-tert-butyl-2-benzothiazolylsulfenamide (NS), a process oil, a filler such as carbon black and an antioxidant optionally, mixing, moulding and then heating.

The rubber composition of the present invention is applicable to many kinds and manners of uses. The rubber composition of the present invention can be used particularly for an innerliner and a case of a tyre, a tube, a gas hose and the like.

In the present invention, for example, the following compositions for the rubber composition and conditions for the mixing or kneading can be adopted.

### Embodiment 1

| | |
|---|---|
| Functional group-vulcanisable rubber (EXXPRO 90-10) | 100 parts by weight |
| Organic curing agent (EUR) | 0.1 to 1 parts by weight |
| Inorganic curing agent (ZnO) | 1 to 5 parts by weight |
| Double bond-vulcanisable rubber (NR) | 25 to 100 parts by weight |
| Mixing temperature in (a) | 45° to 85°C |
| Mixing time in (a) | 3 to 6 min |
| Selective vulcanisation temperature in (b) | 100° to 120°C |
| Selective vulcanisation time in (b) | 4 to 10 min |

This rubber composition is advantageous from the viewpoint that the rubber moulded article having good properties such as low air permeability and adhesion property by vulcanisation.

### Embodiment 2

| | |
|---|---|
| Functional group-vulcanisable rubber (epoxidised NR) | 100 parts by weight |
| Organic curing agent (EUR) | 0.1 to 3 parts by weight |
| Inorganic curing agent (ZnO) | 1 to 3 parts by weight |
| Double bond-vulcanisable rubber (NR) | 25 to 100 parts by weight |
| Mixing temperature in (a) | 45° to 75°C |
| Mixing time in (a) | 3 to 6 min |
| Selective vulcanisation temperature in (b) | 100° to 120°C |
| Selective vulcanisation time in (b) | 4 to 10 min |

This rubber composition is advantageous from the viewpoint that the rubber moulded article having good properties such as high hardness as well as low air permeability and adhesion property by vulcanisation.

### Embodiment 3

| | |
|---|---|
| Functional group-vulcanisable rubber (halogenated butyl rubber) | 100 parts by weight |
| Organic curing agent (EUR) | 0.1 to 2 parts by weight |
| Inorganic curing agent (ZnO) | 1 to 5 parts by weight |
| Double bond-vulcanisable rubber (NR) | 25 to 100 parts by weight |
| Mixing temperature in (a) | 48° to 85°C |
| Mixing time in (a) | 3 to 10 min |
| Selective vulcanisation temperature in (b) | 100° to 120°C |
| Selective vulcanisation time in (b) | 4 to 10 min |

This rubber composition is advantageous from the viewpoint that air permeability is low.

### Embodiment 4

| | |
|---|---|
| Functional group-vulcanisable rubber (maleic acid-modified EPDM) | 100 parts by weight |
| Organic curing agent (EUR) (4,4'-diamino-diphenyl ether) | 0.5 to 3 parts by weight |
| Inorganic curing agent (ZnO) | 1 to 5 parts by weight |
| Double bond-vulcanisable rubber (NR) | 25 to 100 parts by weight |
| Mixing temperature in (a) | 45° to 80°C |
| Mixing time in (a) | 2 to 4 min |
| Selective vulcanisation temperature in (b) | 100° to 120°C |
| Selective vulcanisation time in (b) | 2 to 8 min |

This rubber composition is advantageous from the viewpoint that weather resistance as well as low air permeability are obtained.

### Embodiment 5

| | |
|---|---|
| Functional group-vulcanisable rubber (carboxylic group-containing NBR) | 100 parts by weight |
| Organic curing agent (EUR) | 0.5 to 3 parts by weight |
| Inorganic curing agent (ZnO) | 1 to 5 parts by weight |
| Double bond-vulcanisable rubber (NR) | 25 to 100 parts by weight |
| Mixing temperature in (a) | 40° to 80°C |
| Mixing time in (a) | 2 to 40 min |
| Selective vulcanisation temperature in (b) | 100° to 120°C |
| Selective vulcanisation time in (b) | 2 to 8 min |

This rubber composition is advantageous from the viewpoint that air permeability is low.

The preparation of the rubber composition of the present invention is explained in detail according to Examples in the follow.

### Preparation Example 1 to 7

In first, Mixed Products A to G through the step (a) of the present invention were prepared by mixing with rolls in the mixing ratios and conditions shown in Table 1.

As the functional group-vulcanisable rubber 1, EXXPRO 90-10 (bromide of isobutylene/p-methylstyrene copolymer rubber) available from EXXON Corporation was used. As the functional group-vulcanisable rubber 2, Bromobutyl 2222 (bromobutyl rubber) available from EXXON Corporation was used. As the functional group-vulcanisable rubber 3, Chlorobutyl 1066 (chlorobutyl rubber) available from EXXON Corporation was used. As the functional group-vulcanisable rubber 4, ROYALTUF® 465 (maleic acid-modified EPDM) available from Uniroyal Chemical Company Inc was used. As the functional group-vulcanisable rubber 5, DN 631 (carboxyl group-containing NBR) available from Nippon Zeon Co Ltd was used. As the functional group-vulcanisable rubber 6, ENR 50 (epoxydised natural rubber) available from Guthrie Co Ltd was used. As the functional group-vulcanisable rubber 7, Neoprene WRT (chloroprene) available from Showa Denko K.K. was used.

Also, as the curing agent 1, EUR (N.N'-diethylthiourea) available from Ouchi Sinko Kagaku Kogyo Kabushiki Kaisha was used. As the curing agent 2, 4,4'-diamino-diphenyl ether was used, and as the curing agent 3, ZnO was used.

### Comparative Preparation Example 1

The vulcanised Mixed Product H was obtained in the same manner as in preparation Example 1 (Mixed Product A) except that the mixing was carried out at 100°C which was the vulcanising temperature of the functional group-vulcanisable rubber.

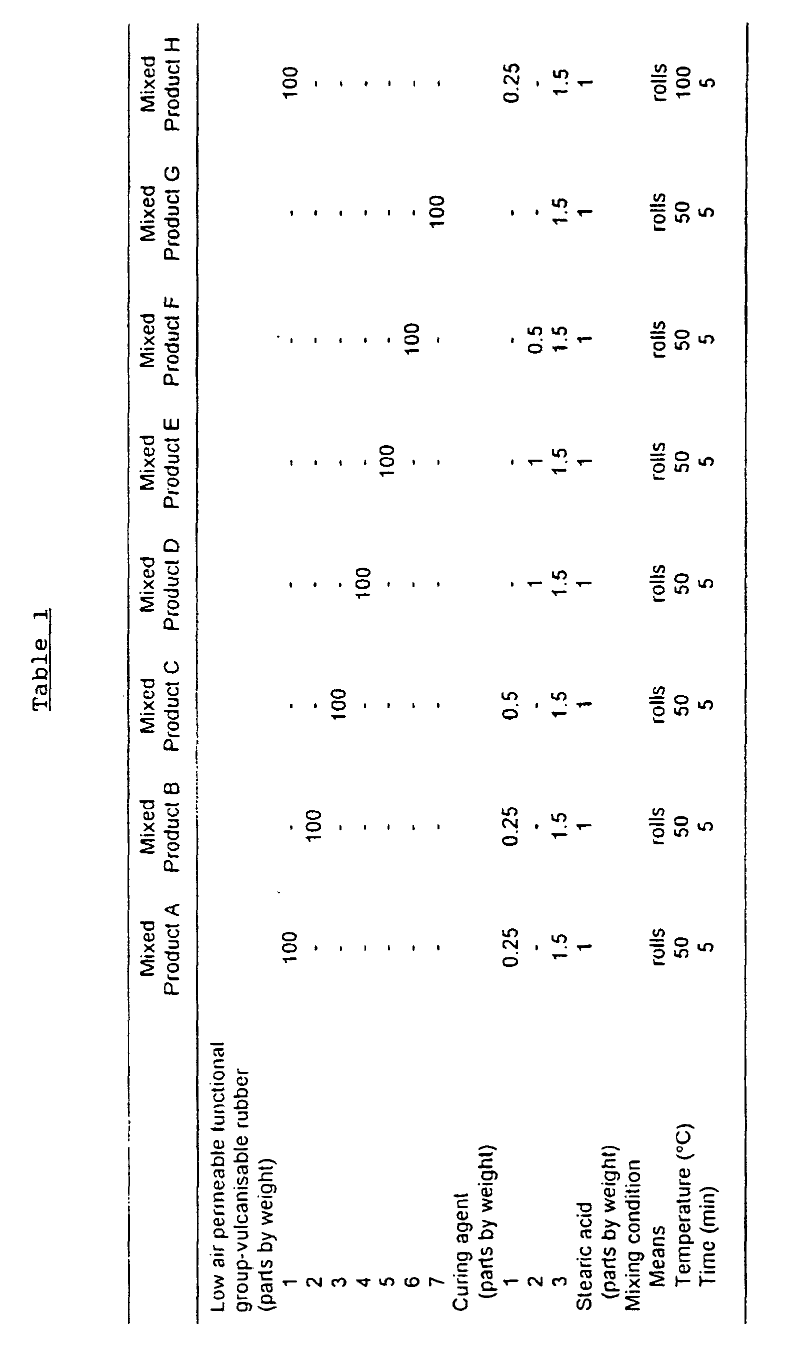

### Examples 1 to 16

Rubber Compositions 1 to 16 of the present invention were prepared by mixing and selectively vulcanising Mixed Products A to G obtained in Preparation Examples 1 to 7 according to the step (b) at 100°C for 8 minutes by means of a Banbury mixer in the mixing ratios shown in Table 2. The double-bond vulcanisable rubber was natural rubber. As the carbon black, DIABLACK H available from Mitsubishi Chemical Corporation was used. As the mineral oil, a mineral oil available from Japan Energy Corporation was used.

### Evaluation Method

### Air permeability

To evaluate air permeability of rubber moulded articles comprising the rubber compositions of the present invention, 5 parts by weight of ZnO, 1 part by weight of NS and 100 parts by weight of each Rubber Composition 1 to 16 were mixed by means of rolls. To vulcanise the double bond-vulcanisable rubber, the vulcanisation and the moulding were carried out by means of an oil press under the conditions of 9.8 mPa (100kgf/cm²) of vulcanisation pressure, 150°C of vulcanisation temperature and 40 minutes of vulcanisation time to obtain Rubber Moulded Articles 1 to 16 in the form of rubber sheets of 1 mm in thickness.

According to the testing method of ASTM D-1434-75M, an air permeability of each Rubber Moulded Article 1 to 16 was measured at a temperature of 20°C by means of Gas Permeability Measuring Machine (GTR Tester M-C1) available from Toyo Seiki Seisaku-Sho Ltd. The results are shown in Table 2.

### Adhesion property by vulcanisation

To evaluate the adhesion property to diened rubber compositions by vulcanisation of the rubber composition of the present invention, sheets of 2 mm in thickness were prepared from Rubber Compositions 1 to 16 by means of rolls and then Rubber Sheets 1 to 16 of 2 mm in thickness, 80 mm in width and 150 mm in length were produced. Separately, a sheet 2 mm in thickness was prepared from a blend (including carbon black, sulfur and vulcanising accelerator) of natural rubber and butadiene rubber in a weight ratio of 40:60, a diene rubber sheet of 80 mm in width and 150 mm in length was produced by cutting the sheet. After each of the resultant rubber sheets 1 to 16 was adhered by vulcanisation to the diene rubber sheet, the peel strength (adhesive strength) was measured. The higher the peel strength is, the superior the adhesion property by vulcanisation is.

To produce a sample for measuring peel strength, as shown in Figure 1, the rubber sheet 1 was put on the diene sheet 2 by inserting partly inserting members comprising Mylar film 4 and nylon canvas 5 therebetween so that peeling is begun at their interfaces. Then the rubber sheet 1 and the diene sheet 2 were adhered to each other by vulcanisation at 160°C for 30 minutes with a pressure of 9.8 mPa (100 kgf/cm²). Numeral 3 designates a topped fabric which is reinforcing the rubber sheets not to be torn at the time of the peeling procedure and, usually is not vulcanised. In the present invention, the rubber coated polyester resin of 1 mm in thickness, 80 mm in width and 150 mm in length was employed as the topped fabric 3. Mylar film 4 prevents the rubber sheets from adhering to each other on their whole surfaces, and can have a melting point of not lower than 180°C. In the present invention, the Mylar film comprising polyethylene terephthalate of 0.05 mm in thickness, 80 mm in width and 40 mm in length was employed. The nylon canvas 5 was inserted to begin the peeling at the adhered interface. In the present invention, a nylon canvas of a nylon resin of 0.5 mm in thickness, 80 mm in width and 80 mm in length was employed.

Peel strength was measured by peeling the sample for measuring peel strength which was prepared as above at a peeling rate of 50 mm/min by means of Tensile Testing Machine available from Intesco Corporation. The results are shown in Table 2.

Note: Air permeability is given in Tables 2 and 3 as cm³/cm² sec cmHg. The SI equivalent is m³/m².sec.Pa. 1cm³/cm² sec.cmHg = 7.5x10⁻⁶ m³/m².sec.Pa.

Adhesion property is given in Table 2 and Table 3 as Kgf/25mm. The SI unit for Kgf is N and 1Kgf = 9.80665N. The 25mm is the width of test piece used.

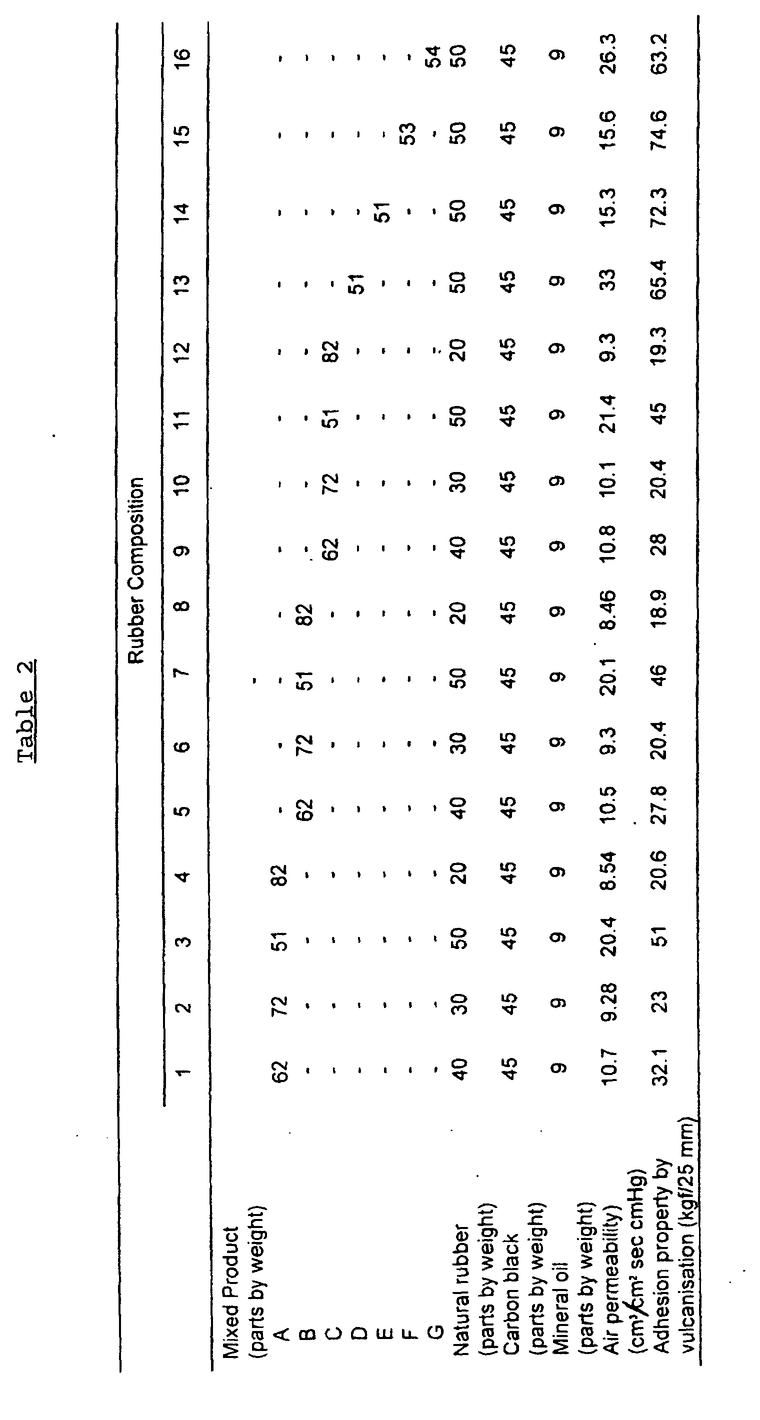

### Comparative Examples 1 to 19

Comparative Rubber Compositions 1 to 19 were obtained by mixing in the mixing ratios shown in Table 3 at 100°C for 8 minutes by means of a Banbury mixer. Then evaluations were carried out in the same manner as in Example 1. The results are shown in Table 3.

### Comparative Example 20

The mixing was tried in the same manner as in Comparative Example 1 except that Mixed Product H (mixing temperature: 100°C) obtained in Comparative Preparation Example 1 was used and the mixing ratio shown in Table 3 was employed. However, the vulcanised Mixed Product H could not disperse into the rubber component uniformly and no rubber composition could be obtained.

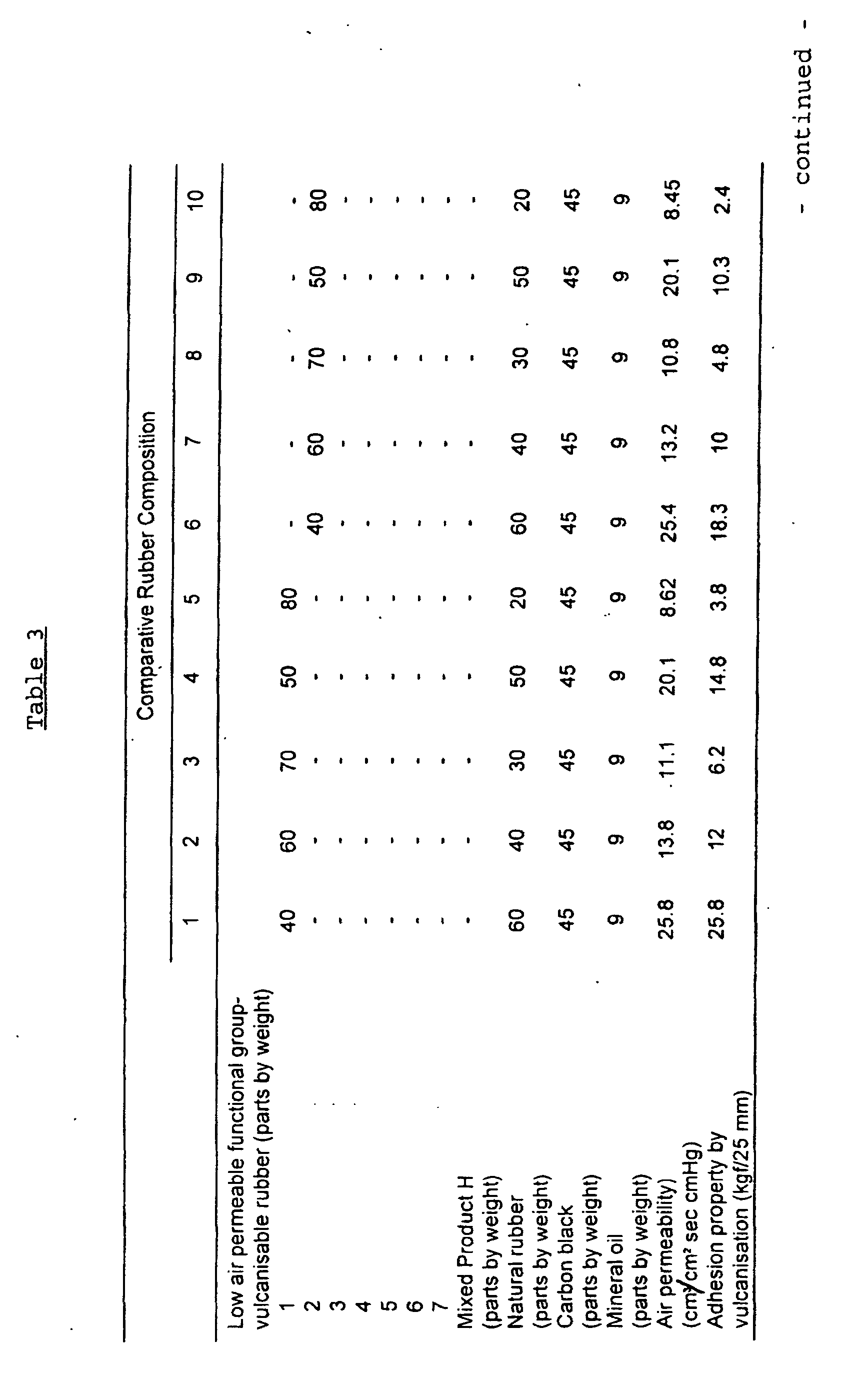

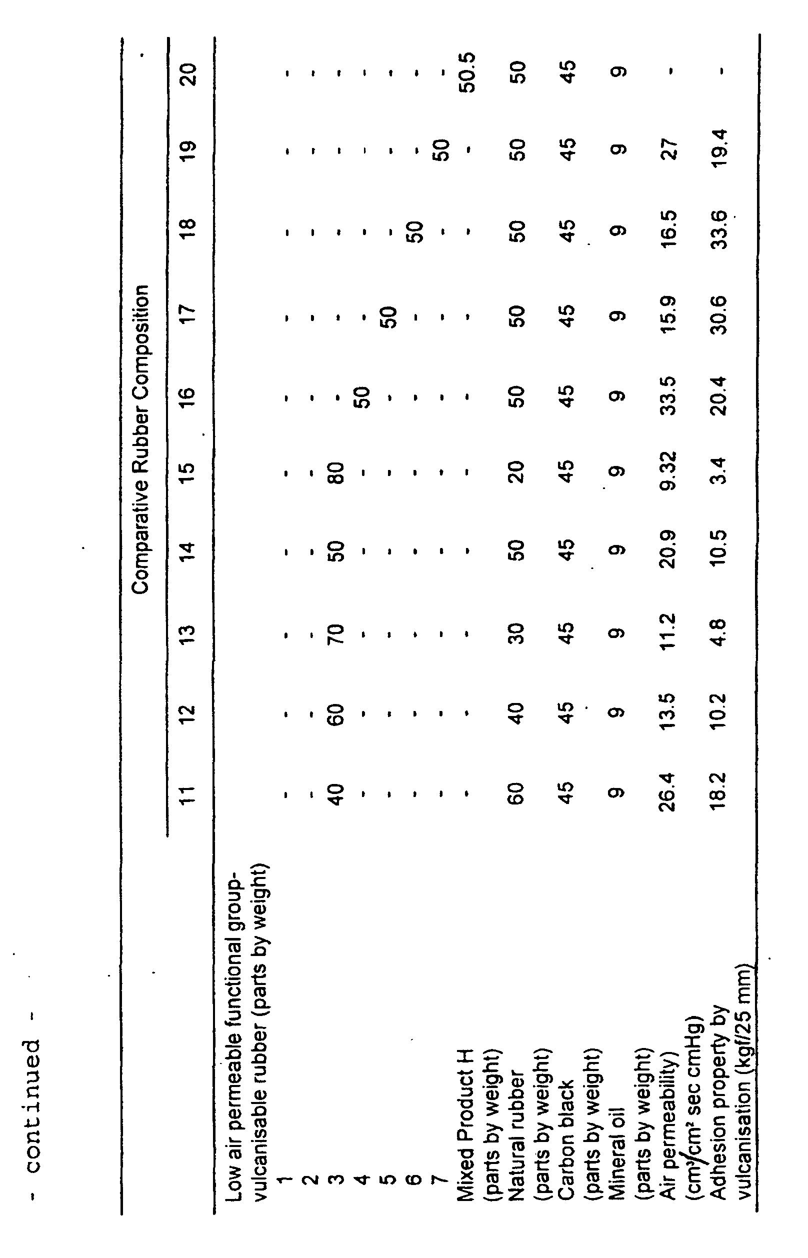

From Tables 2 and 3, it is recognised that the rubber composition of the present invention is superior in adhesion property to other diene rubber compositions by vulcanisation and that Rubber Moulded Articles 1 to 16 obtained from Rubber Compositions 1 to 16 are not inferior in low air permeability compared to the Comparative Rubber Moulded Articles 1 to 19 obtained from Comparative Rubber Compositions 1 to 19.

The rubber composition of the present invention is superior in adhesion property to other diene rubber compositions by vulcanisation and, from the rubber composition, the rubber moulded article not inferior in low air permeability can be obtained.

## Claims

1. A process for producing a rubber composition comprising:
(a) mixing at least one low air permeable rubber having a vulcanisable functional group and a curing agent, which can vulcanise the low air permeable rubber having vulcanisable functional group, in an amount of 0.1 to 30 parts by weight of the curing agent per 100 parts by weight of the low air permeable rubber having vulcanisable functional group, at a temperature within a range where the low air permeable rubber having vulcanisable functional group is not vulcanised, and
(b) blending 25 to 100 parts by weight of at least one rubber having vulcanisable carbon-carbon double bond per 100 parts by weight of the low air permeable rubber having a vulcanisable functional group with the mixed product of step (a) and mixing the resulted blended product at a temperature within a range where the low air permeable rubber having the vulcanisable functional group can be vulcanised to selectively vulcanise the low air permeable rubber having the vulcanisable functional group, provided that the mixing temperature in step (a) must be lower than that in step (b); said low air permeable rubber having vulcanisable functional group being at least one of NBR, fluorine-containing rubber, epichlorohydrin rubber, butyl rubber, halogenated butyl rubber, brominated isobutylene/p-methylstyrene copolymer rubber, chloroprene rubber, ethylene/acrylate rubber, expoxidised natural rubber and ethylene/propylene/diene rubber.

2. A process according to claim 1, **characterised in that** the functional group of the low air permeable rubber having vulcanisable functional group is a hydroxyl group, a carboxyl group, an amino group, an isocyanate group, an epoxy group, a halogene atom (including fluorine atom in fluorine-containing polymer), an acid anhydride group, an ester group, a chlorosulfonic group, a methylol group, a sulfonic acid salt group and/or a nitrile group.

3. A process according to claim 1 or 2, **characterised in that** the low air permeable rubber having vulcanisable functional group is chlorobutyl rubber and/or bromobutyl rubber.

4. A process according to any of claims 1 to 3, **characterised in that** the curing agent is an oxide, carbonate or hydroxide of a bivalent metal of Mg, Zn, Ca or Ba.

5. A process according to any of claims 1 to 3, **characterised in that** the curing agent is N,N'-diethylthiourea.

6. A process according to any of claims 1 to 5, **characterised in that** the temperature range of mixing in the step (a) is from 40°C to 100°C, the temperature range for mixing in step (b) is from 90°C to 140°C, and the mixing temperature in step (a) is lower than that of in step (b).

## Patentansprüche

1. Verfahren zur Herstellung einer Kautschukmischung, umfassend:
(a) Mischen wenigstens eines Kautschuks mit niedriger Luftdurchlässigkeit, der eine vulkanisierbare funktionelle Gruppe hat, und eines Vulkanisationsmittels, welches den Kautschuk mit niedriger Luftdurchlässigkeit, der vulkanisierbare funktionelle Gruppe hat, vulkaniseren kann, in einer Menge von 0,1 bis 30 Gew.-Teilen des Vulkanisationsmittels pro 100 Gew.-Teile des Kautschuks mit niedriger Luftdurchlässigkeit, der vulkanisierbare funktionelle Gruppe hat, bei einer Temperatur innerhalb eines Bereiches, in welchem der Kautschuk mit niedriger Luftdurchlässigkeit, der vulkanisierbare funktionelle Gruppe hat, nicht vulkanisiert wird, und
(b) Mischen von 25 bis 100 Gew.-Teilen wenigstens eines Kautschuks, der vulkanisierbare Kohlenstoff-Kohlenstoff-Doppelbindungen hat, pro 100 Gew.-Teile des Kautschuks mit niedriger Luftdurchlässigkeit, der eine vulkanisierbare funktionelle Gruppe hat, mit dem gemischten Produkt von Stufe (a) und Mischen des resultierenden gemischten Produktes bei einer Temperatur innerhalb eines Bereiches, in welchem der Kautschuk mit niedriger Luftdurchlässigkeit, der die vulkanisierbare funktionelle Gruppe hat, vulkanisiert werden kann, um den Kautschuk mit niedriger Luftdurchlässigkeit, der die vulkanisierbare funktionelle Gruppe hat, selektiv zu vulkanisieren vorausgesetzt, daß die Mischtemperatur in Stufe (a) niedriger als diejenige in Stufe (b) sein muß;
wobei dieser Kautschuk mit niedriger Luftdurchlässigkeit, der vulkanisierbare funktionelle Gruppe hat, wenigstens einer ist von: NBR, fluorhaltigem Kautschuk, Epichlorhydrinkautschuk, Butylkautschuk, halogeniertem Butylkautschuk, bromiertem Isobutylen/p-Methylstyrolcopolymerkautschuk, Chloroprenkautschuk, Ethylen/Acrylatkautschuk, epoxidiertem Naturkautschuk und Ethylen/Propylen/Dienkautschuk.

2. Verfahren entsprechend Anspruch 1, **dadurch gekennzeichnet, daß** die funktionelle Gruppe des Kautschuks mit niedriger Luftdurchlässigkeit, der vulkanisierbare funktionelle Gruppe hat, eine Hydroxylgruppe, eine Carboxylgruppe, eine Aminogruppe, eine Isocyanatgruppe, eine Epoxygruppe, ein Halogenatom (einschließlich Fluoratom eines fluorhaltigem Polymerem), eine Säureanhydridgruppe, eine Estergruppe, eine Chlorsulfongruppe, eine Methylolgruppe, eine Sulfonsäuresalzgruppe und/oder eine Nitrilgruppe ist.

3. Verfahren entsprechend Anspruch 1 oder 2, **dadurch gekennzeichnet, daß** der Kautschuk mit niedriger Luftdurchlässigkeit, der vulkanisierbare funktionelle Gruppe hat, Chlorbutylkautschuk und/oder Brombutylkautschuk ist.

4. Verfahren entsprechend irgendeinem der Ansprüche 1 bis 3, **dadurch gekennzeichnet, daß** das Vulkanisationsmittel ein Oxid, Carbonat oder Hydroxid eines zweiwertigen Metalles von Mg, Zn, Ca oder Ba ist.

5. Verfahren entsprechend irgendeinem der Ansprüche 1 bis 3, **dadurch gekennzeichnet, daß** das Vulkanisationsmittel N,N'-Diethylthioharnstoff ist.

6. Verfahren entsprechend irgendeinem der Ansprüche 1 bis 5, **dadurch gekennzeichnet, daß** der Temperaturbereich des Mischens in der Stufe (a) von 40°C bis 100°C ist, der Temperaturbereich für Mischen in der Stufe (b) von 90°C bis 140°C ist, und die Mischtemperatur in Stufe (a) niedriger als diejenige von Stufe (b) ist.

## Revendications

1. Procédé de production d'une composition de caoutchouc comprenant :
(a) le mélange d'au moins un caoutchouc faiblement perméable à l'air ayant un groupe fonctionnel vulcanisable et d'un agent durcissant qui peut vulcaniser le caoutchouc faiblement perméable à l'air ayant un groupe fonctionnel vulcanisable, en une quantité de 0,1 à 30 parties en poids de l'agent durcissant pour 100 parties en poids du caoutchouc faiblement perméable à l'air ayant un groupe fonctionnel vulcanisable, à une température dans une plage où le caoutchouc faiblement perméable à l'air ayant un groupe fonctionnel vulcanisable n'est pas vulcanisé, et
(b) le mélange de 25 à 100 parties en poids d'au moins un caoutchouc ayant une double liaison carbone-carbone vulcanisable pour 100 parties en poids du caoutchouc faiblement perméable à l'air ayant un groupe fonctionnel vulcanisable avec le produit mélangé de l'étape (a) et le mélange du produit mélangé obtenu à une température dans une plage où le caoutchouc faiblement perméable à l'air ayant le groupe fonctionnel vulcanisable peut être vulcanisé pour vulcaniser sélectivement le caoutchouc faiblement perméable à l'air ayant le groupe fonctionnel vulcanisable, à condition que la température de mélange à l'étape (a) soit inférieure à celle de l'étape (b) ; ledit caoutchouc faiblement perméable à l'air ayant un groupe fonctionnel vulcanisable étant au moins un élément parmi le NBR, le caoutchouc fluoré, le caoutchouc épichlorhydrine, le caoutchouc butyle, le caoutchouc butyle halogéné, le caoutchouc copolymère isobutylène/p-méthylstyrène bromé, le caoutchouc chloroprène, le caoutchouc éthylène/acrylate, le caoutchouc naturel epoxydé et le caoutchouc éthylène/propylène/diène.

2. Procédé selon la revendication 1, **caractérisé en ce que** le groupe fonctionnel du caoutchouc faiblement perméable à l'air ayant un groupe fonctionnel vulcanisable est un groupe hydroxyle, un groupe carboxyle, un groupe amino, un groupe isocyanate, un groupe époxy, un atome d'halogène (y compris un atome de fluor dans un polymère fluoré), un groupe anhydride d'acide, un groupe ester, un groupe chlorosulfonique, un groupe méthylol, un groupe sel d'acide sulfonique et/ou un groupe nitrile.

3. Procédé selon la revendication 1 ou 2, **caractérisé en ce que** le caoutchouc faiblement perméable à l'air ayant un groupe fonctionnel vulcanisable est le caoutchouc chlorobutyle et/ou le caoutchouc bromobutyle.

4. Procédé selon l'une quelconque des revendications 1 à 3, **caractérisé en ce que** l'agent durcissant est un oxyde, un carbonate ou un hydroxyde d'un métal bivalent de Mg, Zn, Ca ou Ba.

5. Procédé selon l'une quelconque des revendications 1 à 3, **caractérisé en ce que** l'agent durcissant est la N,N'-diéthylthiourée.

6. Procédé selon l'une quelconque des revendications 1 à 5, **caractérisé en ce que** la plage de températures du mélange à l'étape (a) va de 40 °C à 100 °C, la plage de températures pour le mélange à l'étape (b) va de 90 °C à 140 °C, et la température de mélange à l'étape (a) est inférieure à celle de l'étape (b).
